# EUROPÄISCHE PATENTSCHRIFT

(11) **EP 1 079 953 B1**
(45) Veröffentlichungstag und Bekanntmachung des Hinweises auf die Patenterteilung: **06.11.2002**
(21) Anmeldenummer: 99926347.8
(22) Anmeldetag: 20.05.1999
(51) Int. Cl.: B23Q 5/10

(54) **TRANSPORTABLE WERKZEUGMASCHINE, INSBESONDERE TISCHKREISSÄGE**
MOBILE MACHINE TOOL, ESPECIALLY TABLE SAW
MACHINE-OUTIL TRANSPORTABLE, EN PARTICULIER SCIE CIRCULAIRE A TABLE

(30) Priorität: 20.05.1998 DE 29809768 U
(43) Veröffentlichungstag der Anmeldung: 07.03.2001
(73) Patentinhaber: Elektra Beckum Aktiengesellschaft, D-49716 Meppen (DE)
(72) Erfinder: NIEMANN, Bernhard, D-49740 Haselünne (DE); RUGEN, Hermann, D-49716 Meppen (DE)
(74) Vertreter: Gesthuysen, von Rohr & Eggert
(86) Internationale Anmeldenummer: EP9903473
(87) Internationale Veröffentlichungsnummer: WO99059773

(56) Entgegenhaltungen:
- EP-A- 0 176 810
- DE-A- 4 315 939
- US-A- 4 489 261
- US-A- 4 784 192

## Beschreibung

Die Erfindung betrifft eine transportable Werkzeugmaschine, insbesondere eine Tischkreissäge, mit den Merkmalen des Oberbegriffs von Patentanspruch 1 bzw. den Merkmalen des Oberbegriffs des nebengeordneten Patentanspruchs 2.

Die Erfindung betrifft eine transportable Werkzeugmaschine, darunter ist weder eine fest installierte, noch eine in der Hand gehaltene Werkzeugmaschine zu verstehen, sondern eine Werkzeugmaschine, die auf einem Tisch oder einem Gestell steht, um die Bearbeitung des Werkstücks auszuführen, jedoch von Größe und Gewicht her so gestaltet ist, daß sie von Ort zu Ort transportiert werden, zweckmäßigerweise von einer Person oder zwei Personen getragen werden kann.

Eine transportable Werkzeugmaschine der in Rede stehenden Art ist bekannt (DE - U- 297 21 332). Es handelt sich nur um ein Beispiel einer transportablen Werkzeugmaschine, wobei im Prinzip solche Werkzeugmaschinen seit Jahrzehnten zum Stand der Technik gehören.

Wichtig ist für transportable Werkzeugmaschinen insbesondere deren Gewicht. Dieses wird maßgeblich vom Gewicht des elektrischen Antriebsmotors bestimmt, jedenfalls dann, wenn erhebliche Wellenleistungen erforderlich sind, wie beispielsweise bei Tischkreissägen. Um das Gewicht derartiger transportabler Werkzeugmaschinen möglichst gering zu halten, werden Universalmotoren eingesetzt. Diese laufen mit sehr hoher Drehzahl, bauen klein und haben ein vergleichsweise geringes Gewicht. Eine Wellenleistung von 1 kW bei 18.000 min⁻¹ bedeuten bei einem Universalmotor ein Motorgewicht von 1,5 bis 2,0 kg und einen Raumbedarf von ca. 0,75 l.

Bei Werkzeugmaschinen, insbesondere Tischkreissägen, sind Universalmotoren in der Praxis deshalb problematisch, weil sie verschleißempfindlich sind wegen des erforderlichen Kollektors und der erforderlichen Bürsten. Der Verschleiß wird durch die staubbelastete Umgebung gerade bei Tischkreissägen noch erhöht.

Der Erfindung liegt die Aufgabe zugrunde, eine transportable Werkzeugmaschine, insbesondere Tischkreissäge, der in Rede stehenden Art bei möglichst geringem Gewicht verschleißfester auszugestalten.

Die zuvor aufgezeigte Aufgabe ist bei der durch die Merkmale des Oberbegriffs des Anspruchs 1 beschriebenen transportablen Werkzeugmaschine durch die Merkmale des kennzeichnenden Teils gelöst. Erfindungsgemäß wird ein im wesentlichen wartungsfreier Asynchronmotor als elektrischer Antriebsmotor eingesetzt. Natürlich ist der Einsatz von Asynchronmotoren für Werkzeugmaschinen an sich bekannt. Bislang sind aber die Gewichts- und Raumverhältnisse bei Asynchronmotoren als hinderlich angesehen worden, so daß Asynchronmotoren bei transportablen Werkzeugmaschinen nur ungern eingesetzt wurden. Zumindest war das Gewicht der transportablen Werkzeugmaschine dann vergleichsweise hoch. Das liegt daran, daß ein Asynchronmotor mit seiner Drehzahl an die Netzfrequenz gebunden ist. Die Drehzahl liegt geringfügig unter der synchronen Drehzahl, welche durch den Quotienten aus Netzfrequenz und Polpaarzahl bestimmt wird. Bei üblicher Netzfrequenz von 50 Hz wird eine Wellenleistung von 1 kW bei 3000 min⁻¹ mit einem Motorgewicht von 8,0 bis 10,0 kg und einem Raumbedarf des Asynchronmotors von 1,5 bis 2,0 l erkauft. Entscheidend für Gewicht und Volumen des Asynchronmotors ist der Eisen- und Spulenanteil des Asynchronmotors.

Durch die erfindungsgemäß vorgeschlagene Kombination des Asynchronmotors mit einem Frequenzumrichter wird der Asynchronmotor mit erheblich höherer Betriebsfrequenz betrieben. Dadurch wird eine wesentlich höhere Drehzahl erreicht. Bei vorgegebener Wellenleistung kommt man so mit einem wesentlich kleineren Asynchronmotor aus, der ein wesentlich geringeres Gewicht und ein geringeres Volumen hat. Damit sinkt das Gewicht der transportablen Werkzeugmaschine, die mit diesem Asynchronmotor mit Frequenzumrichter ausgerüstet ist, erheblich, denn das Gewicht des Frequenzumrichters selbst fällt kaum ins Gewicht. Die Gesamteinsparung von Gewicht und Volumen wird auf etwa 50 % gegenüber den bisher eingesetzten Asynchronmotoren ohne Frequenzumrichter geschätzt.

Bei ähnlicher elektrotechnischer Ausgangslage kann anstelle eines Asynchronmotors auch ein Synchronmotor, der exakt an die Drehzahl des Drehfeldes gebunden ist, also keinen Schlupf zeigt, eingesetzt werden.

Bevorzugte Ausführungsbeispiele sind auch Gegenstand der Unteransprüche.

Im folgenden wird die Erfindung anhand einer lediglich ein Ausführungsbeispiel darstellenden Zeichnung näher erläutert. In der Zeichnung zeigt
- Fig. 1: eine prinzipielle Darstellung einer transportablen Werkzeugmaschine, im Beispielfall einer transportablen Tischkreissäge,
- Fig. 2: ein Blockschaltbild der erfindungsgemäßen Werkzeugmaschine.

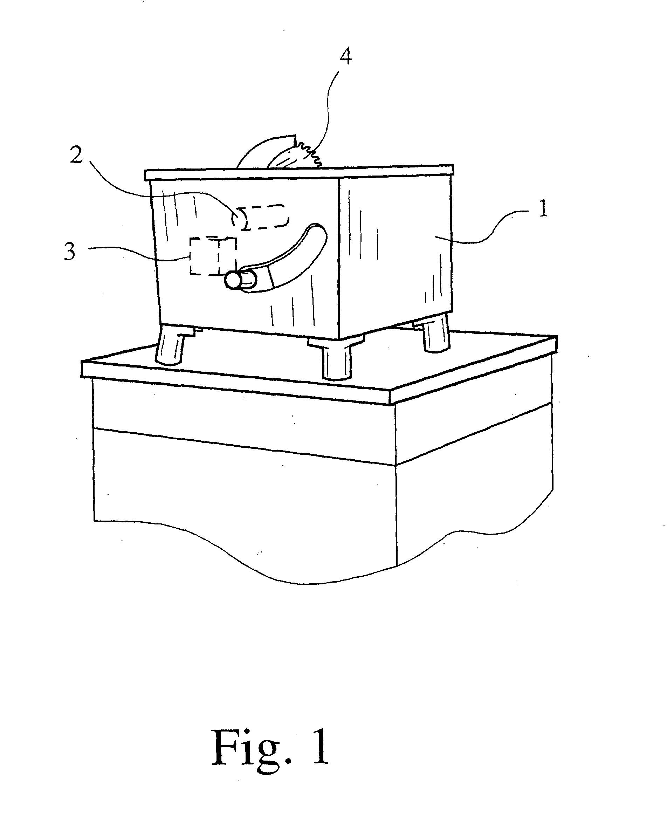

Die in Fig. 1 dargestellte transportable Werkzeugmaschine ist im Ausführungsbeispiel eine Tischkreissäge mit einem Gehäuse 1, einem darin angeordneten, lediglich angedeuteten elektrischen Antriebsmotor 2 und einer Anschlußeinrichtung 3 für diesen elektrischen Antriebsmotor 2, mit der dieser Antriebsmotor 2 an ein Netz mit üblicherweise niedriger Netzfrequenz angeschlossen ist. Die Netzfrequenz in Deutschland beträgt 50 Hz für das normale Haushaltsnetz, in den USA wird beispielsweise mit 60 Hz gearbeitet.

Vom Antriebsmotor 2 wird ein Werkzeug 4 der Werkzeugmaschine, im dargestellten und bevorzugten Ausführungsbeispiel ein Sägeblatt der Tischkreissäge, angetrieben.

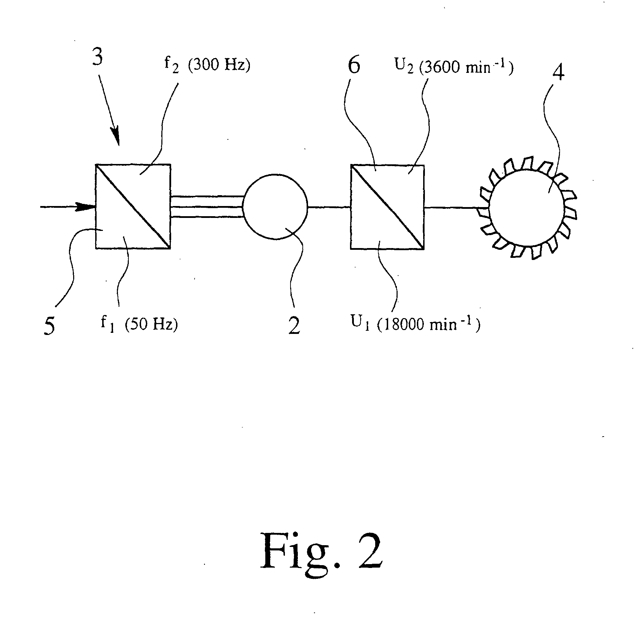

Fig. 2 macht nun deutlich, daß der elektrische Antriebsmotor 2, der als Asynchronmotor ausgerührt ist, über einen Frequenzumrichter 5 in der Anschlußeinrichtung 3 an das Netz angeschlossen ist. Frequenzumrichter 5 sind mittlerweile in einer Vielzahl von Ausführungsformen am Markt erhältlich, auf entsprechende Veröffentlichungen der Lieferanten solcher Frequenzumrichter 5 und die Fachliteratur darf verwiesen werden. Durch den Frequenzumrichter 5 wird die niedrige Netzfrequenz auf eine hohe Betriebsfrequenz für den Antriebsmotor 2 umgesetzt, im dargestellten Beispielfall auf eine Frequenz von 300 bis 400 Hz. Ein als Asynchronmotor ausgeführte elektrische Antriebsmotor 2 wird dann mit einer entsprechend höheren Drehzahl laufen, nämlich bestimmt aus dem Quotienten von Betriebsfrequenz durch Polpaarzahl. Hat der Asynchronmotor im Betrieb bei 50 Hz beispielsweise eine Drehzahl von 3.000 min⁻¹, so wird er mit 300 Hz eine Drehzahl von 18.000 min⁻¹, mit 400 Hz eine Drehzahl von 24.000 min⁻¹ haben.

Wesentlich ist, daß bei hohen Drehzahlen eine bestimmte Wellenleistung, beispielsweise von 1 kW mit einem wesentlich geringeren Gewicht des Asynchronmotors erreicht wird, weil der Eisen- und Spulenanteil geringer ist als bei einem Asynchronmotor gleicher Wellenleistung, der bei niedriger Drehzahl betrieben wird. Das ist alles im einzelnen im allgemeinen Teil der Beschreibung bereits erläutert worden.

Fig. 2 zeigt ferner, daß der elektrische Antriebsmotor 2 hier in Form eines Asynchronmotors über ein Untersetzungsgetriebe 6 mit dem Werkzeug 4, hier also dem Sägeblatt der Tischkreissäge, gekuppelt ist, das so mit entsprechend niedrigerer Drehzahl, hier im Beispielfall einer Drehzahl von 3.600 bzw. 4.800 min⁻¹ betrieben wird.

Anstelle eines Asynchronmotors kann auch ein exakt netzgeführter Synchronmotor eingesetzt werden.

Wesentlich ist das aufgrund der höheren Betriebsfrequenz erhebliche niedrigere Gewicht und das erheblich geringere Volumen des Asynchronmotors, der insofern auch für eine transportable Werkzeugmaschine einsetzbar wird und dort all seine bekannten Vorteile der Wartungsfreiheit in ungünstigen Umgebungsverhältnissen zeigen kann.

## Patentansprüche

1. Transportable, jedoch nicht handgehaltene Werkzeugmaschine
mit einem Außengehäuse (1), einem darin angeordneten elektrischen Antriebsmotor (2) mit einer Anschlußeinrichtung (3) zum Anschluß an ein elektrisches Versorgungsnetz mit niedriger Netzfrequenz und mit einem vom Antriebsmotor (2) angetriebenen Werkzeug (4),
**dadurch gekennzeichnet,**
**daß** der elektrische Antriebsmotor (2) als Asynchronmotor ausgeführt ist,
**daß** die Anschlußeinrichtung (3) einen Frequenzumrichter (5) aufweist, durch den die niedrige Netzfrequenz auf eine hohe Betriebsfrequenz des elektrischen Antriebsmotors (2) umgesetzt wird,
**daß** der elektrische Antriebsmotor (2) mit einer der höheren Betriebsfrequenz entsprechenden höheren Drehzahl betrieben wird und
**daß** der elektrische Antriebsmotor (2) über ein Untersetzungsgetriebe (6) mit dem Werkzeug (4) gekuppelt ist, das dementsprechend mit niedrigerer, für die Bearbeitung von Werkstücken geeigneter Drehzahl betrieben wird.

2. Transportable, jedoch nicht handgehaltene Werkzeugmaschine
mit einem Außengehäuse (1), einem darin angeordneten elektrischen Antriebsmotor (2) mit einer Anschlußeinrichtung (3) zum Anschluß an ein elektrisches Versorgungsnetz mit niedriger Netzfrequenz und einem vom Antriebsmotor (2) angetriebenen Werkzeug (4),
**dadurch gekennzeichnet,**
**daß** der elektrische Antriebsmotor (2) als Synchronmotor ausgeführt ist,
**daß** die Anschlußeinrichtung (3) einen Frequenzumrichter (5) aufweist, durch den die niedrige Netzfrequenz auf eine hohe Betriebsfrequenz des elektrischen Antriebsmotors (2) umgesetzt wird,
**daß** der elektrische Antriebsmotor (2) mit einer der höheren Betriebsfrequenz entsprechenden höheren Drehzahl betrieben wird und
**daß** der elektrische Antriebsmotor (2) über ein Untersetzungsgetriebe (6) mit dem Werkzeug (4) gekuppelt ist, das dementsprechend mit niedrigerer, für die Bearbeitung von Werkstücken geeigneter Drehzahl betrieben wird.

3. Transportable Werkzeugmaschine nach Anspruch 1 oder 2, **dadurch gekennzeichnet, daß** die Netzfrequenz eine Frequenz von 50 Hz ist.

4. Transportable Werkzeugmaschine nach einem der Ansprüche 1 bis 3, **dadurch gekennzeichnet, daß** die Betriebsfrequenz eine Frequenz von 300 bis 400 Hz ist.

5. Transportable Werkzeugmaschine nach Anspruch 4, **dadurch gekennzeichnet, daß** die der Betriebsfrequenz entsprechende höhere Drehzahl eine Drehzahl von 18.000 bis 24.000 min⁻¹ ist.

6. Transportable Werkzeugmaschine nach Anspruch 5, **dadurch gekennzeichnet, daß** die Drehzahl des Werkzeugs (4) eine Drehzahl von 3.600 bis 4.800 min⁻¹ ist.

7. Transportable Werkzeugmaschine nach einem der Ansprüche 1 bis 6, **dadurch gekennzeichnet, daß** die transportable Werkzeugmaschine eine Tischkreissäge und dementsprechend das Werkzeug (4) ein Kreissägeblatt ist.

## Claims

1. Mobile, however not hand-held, machine tool
comprising an outer casing (1), an electric drive motor (2) arranged therein which has a connecting device (3) for connecting to a power supply network with a low system frequency and a tool (4) driven by the drive motor (2)
**characterized in**
**that** the electric drive motor (2) is configured as an asynchronous motor,
**that** the connecting device (3) comprises a frequency converter (5) by means of which the low system frequency is converted to a high operating frequency of the electric drive motor (2),
**that** the electric drive motor (2) is operated at a higher rotational speed corresponding to the higher operating frequency, and
**that** the electric drive motor (2) is coupled to the tool (4) via a speed-reducing gear train (6), whereby the tool (4) is run at corresponding, lower rotational speed suitable for machine work pieces.

2. Mobile, however not hand-held, machine tool
comprising an outer casing (1), an electric drive motor (2) arranged therein which has a connecting device (3) for connecting to a power supply network with a low system frequency, and a tool (4) driven by the drive motor (2)
**characterized in**
**that** the electric drive motor (2) is configured as a synchronous motor,
**that** the connecting device (3) comprises a frequency converter (5) by means of which the low system frequency is converted to a high operating frequency of the electric drive motor (2),
**that** the electric drive motor (2) is operated at a higher rotational speed corresponding to the higher operating frequency, and
**that** the electric drive motor (2) is coupled to the tool (4) via a speed-reducing gear train (6), whereby the tool (4) is run at a corresponding, lower rotational speed suitable for machining work pieces.

3. Mobile machine tool according to claim 1 or 2, **characterized in that** the system frequency is a frequency of 50 Hz.

4. Mobile machine tool according to any one of claims 1 to 3, **characterized in that** the operating frequency is a frequency of 300 to 400 Hz.

5. Mobile machine tool according to claim 4, **characterized in that** the higher rotational speed corresponding to the operating frequency is a rotational speed of 18,000 to 24,000 RPM.

6. Mobile machine tool according to claim 5, **characterized in that** the rotational speed of the tool (4) is a rotational speed of 3,600 to 4,800 RPM.

7. Mobile machine tool according to any one of claims 1 to 6, **characterized in that** the mobile machine tool is a table circular saw and the corresponding tool (4) is a circular saw blade.

## Revendications

1. Machine-outil transportable, mais non tenue à la main
équipée d'un boîtier extérieur (1), d'un moteur d'entraînement (2) électrique disposé à l'intérieur avec un système de raccordement (3) pour le raccordement à un réseau d'alimentation électrique avec une fréquence de réseau faible et avec un outil (4) entraîné par le moteur d'entraînement (2),
**caractérisée en ce que** le moteur d'entraînement (2) électrique est conçu comme un moteur asynchrone,
**en ce que** le système de raccordement (3) présente un convertisseur de fréquence (5), par lequel la faible fréquence du réseau est convertie en une fréquence de service élevée du moteur d'entraînement (2) électrique,
**en ce que** le moteur d'entraînement (2) électrique est exploité avec un régime supérieur correspondant à la fréquence de service supérieure et
**en ce que** le moteur d'entraînement (2) électrique est couplé par l'intermédiaire d'un engrenage réducteur (6) avec l'outil (4), qui est exploité en conséquence avec un régime plus faible et approprié pour l'usinage de pièces.

2. Machine-outil transportable, mais non tenue à la main
équipée d'un boîtier extérieur (1), un moteur d'entraînement (2) électrique disposé à l'intérieur avec un système de raccordement (3) pour le raccordement à un réseau d'alimentation électrique avec une faible fréquence de réseau et d'un outil (4) entraîné par le moteur d'entraînement (2),
**caractérisé en ce que** le moteur d'entraînement (2) électrique est conçu comme un moteur synchrone,
**en ce que** le système de raccordement (3) présente un convertisseur de fréquence (5), par lequel la faible fréquence de réseau est convertie en une fréquence de service élevée du moteur d'entraînement (2) électrique,
**en ce que** le moteur d'entraînement (2) électrique est exploité avec un régime supérieur correspondant à la fréquence de service supérieure et
**en ce que** le moteur d'entraînement (2) électrique est couplé par l'intermédiaire d'un engrenage réducteur (6) avec l'outil (4), qui est exploité en conséquence avec un régime plus faible et approprié pour l'usinage de pièces.

3. Machine-outil transportable selon la revendication 1 ou 2, **caractérisée en ce que** la fréquence de réseau est une fréquence de 50 Hz.

4. Machine-outil transportable selon l'une quelconque des revendications 1 à 3, **caractérisée en ce que** la fréquence de service est une fréquence allant de 300 jusqu'à 400 Hz.

5. Machine-outil transportable selon la revendication 4, **caractérisée en ce que** le régime supérieur correspondant à la fréquence de service est un régime allant de 18.000 à 24.000 t/min.

6. Machine-outil transportable selon la revendication 5, **caractérisée en ce que** le régime de l'outil (4) est un régime de 3.600 à 4.800 t/min.

7. Machine-outil transportable selon l'une quelconque des revendications 1 à 6, **caractérisée en ce que** la machine-outil transportable est une scie circulaire à table et en conséquence l'outil (4) est une lame de scie circulaire.
